# EUROPEAN PATENT SPECIFICATION

(11) **EP 2 529 616 B1**
(45) Date of publication and mention of the grant of the patent: **11.05.2016**
(21) Application number: 12170611.3
(22) Date of filing: 01.06.2012
(51) Int. Cl.: A01G 27/06

(54) **Plant pot assembly**
Pflanzentopfeinrichtung
Assemblage de pot pour plante

(30) Priority: 01.06.2011 EP 11168448
(43) Date of publication of application: 05.12.2012
(73) Proprietor: Patentstar BV, 2771 NM Boskoop (NL)
(72) Inventor: Van der Starre, Bart, 2742 KV Waddinxveen (NL)
(74) Representative: De Vries & Metman

(56) References cited:
- EP-A1- 1 958 500
- CH-A- 342 027
- CN-U- 201 726 722
- DE-A1- 2 426 582
- DE-C- 103 433
- DE-U1- 8 613 696
- US-A- 4 250 665
- US-A- 4 339 891
- US-A- 4 999 947
- US-A1- 2010 077 661

## Description

### TECHNICAL FIELD

The present invention relates to a plant pot assembly. The assembly comprises a first pot with an interior space for receiving therein a plant in soil or in another growing medium and a liquid reservoir coupled to it. The assembly further comprises a wick which extends from the liquid reservoir to inside the interior space of the first pot for transporting liquid from the liquid reservoir into the first pot.

### BACKGROUND

Such assemblies are known for providing liquid, in particular water, to plants growing in the growing medium more or less automatically for prolonged periods without it being required to water the plants regularly.

For instance, from FR 2 814 639 an arrangement is known for providing a controlled irrigation of plant pots. The arrangement comprises to that end an external container in which in a centre an internal container with a smaller diameter is arranged which is insulated from the outer container. The plant is irrigated by flowing water from the intermediate space between the two containers by means of a covered wick of which the flow is regulated with a screw stop.

US 4,999,947 describes a comparable arrangement.

US 4,741,125 describes a wick-based liquid delivery system for plants. The system includes a chamber for the storage of liquid and a wick which is rigidly supported in a tube in the shape of an inverted U. The system is also equipped with an adjustable moisture-sensitive brake mechanism for regulating the flow of liquid.

These systems are quite complex and therefore they are expensive and vulnerable. Simpler systems are known as well.

E.g., EP 0 688 497 describes a flower pot which is fixed with respect to an outer container by a lid plate. Between the flower pot and the container is water. A wick extends in the
water and through the bottom of the flower pot for thus wetting soil in the flower pot. US 4,250,665, US 4,339,891, US 5,081,790, WO 2009/030019 and GB 2 444 141 also describe, for instance, assemblies of flower pots and reservoirs, wherein a water reservoir is arranged underneath the flower pot, and wherein a wick extends in the water of the reservoir and through the bottom of the flower pot for thus wetting the soil in the flower pot. US 4,250,665 further describes an embodiment (Fig. 4) wherein the opening for the wick is located in the upper portion of the sidewall of the flower pot to permit a higher level of liquid in the liquid reservoir. DE 24 26 582 discloses a similar plant pot according to the preamble of independent claim 1 with liquid storage for prolonged provision of liquid.

DE 103 433 also describes a flower pot with self-humidification, wherein a reservoir is fixed under a plant pot and humidification of the soil occurs from the reservoir via wicks. The wicks extend in a recess of the pot wall and are held therein by a wedge of disinfectant and fertile material. The reservoir is filled by watering the soil from above and collecting the water that is not absorbed by the soil. A similar device for cultivating at least one plant is disclosed in CH 342027.

Also noted is CN 201726722, which discloses a water-saving passive automatic watering device. The watering device comprises an inner sleeve and an outer sleeve respectively with micropore surface; the bottoms of the inner sleeve and the outer sleeve are connected in sealing manner to form a water storage bin; a capillary tube is arranged between the inner sleeve and the outer sleeve; and the capillary tube is a capillary fiber tube; a water injection port is fixedly arranged on the top of the water storage bin.

### SUMMARY

It has appeared to the inventors that the known systems described above nevertheless do not satisfy the demands of growers and sellers, with respect to lifespan, in particular during transport and/or (shop) storage, plant growth, root growth, transportability and/or the amount of care of the plants. Therefore a demand for an improved assembly exists.

To that end an assembly according to the appended claims is provided. The liquid reservoir is arranged such that the reservoir and the level of the liquid received in it are situated substantially below the first pot, at least substantially below the interior space thereof, wherein the wick protrudes along or near an upper edge of the first pot into the interior space of the first pot, and wherein the assembly is arranged to prevent water transport between the reservoir and the growing medium via another route than the wick.

In the assembly, in the interior space of the first pot a plant in a growing medium, in particular soil, may be placed and may be provided through the wick with liquid, in particular water. Since the wick protrudes along or close to an upper edge of the first pot into the interior space of the first pot and extends from there in the interior space a homogeneous humidity distribution over the growing medium is provided. For it has been found that wetting the medium, in particular soil, at the bottom thereof can lead to an inhomogeneous distribution of humidity over the medium, with a too dry upper side and a too humid lower side. Due to this, nutrients cannot be drawn optimally from the growing medium and root growth can lag and therewith growth of the plant as a whole.

The wick may be arranged in the interior space of the first pot in an upper portion, e.g. an upper half or upper quarter, in particular above the roots of a plant in the interior space, wherein further transport of the liquid through the growing medium may be provided by the growing medium itself. Also with this a suitable liquid distribution in the growing medium may be achieved. Thus, it is possible to save on wick material. Also providing the wick and/or planting the plant may be facilitated.

Further it has appeared that by wetting along the underside of the plant pot an increased risk exists of excessive water supply so that the plant roots may rot. Since in the assembly provided herewith liquid transport, e.g. water transport, between the reservoir and the growing medium is prevented outside of the wick, such rotting and drowning of the plant roots can be prevented.

Since the reservoir and the liquid level in the reservoir are substantially situated below the interior space of the first pot it is prevented that, as in communicating vessels, by fluid pressure and by siphoning action of the wick, a liquid level is established in the reservoir and in the first pot above the bottom of the first pot that is too high for the plant roots and that can drown them. A provision for regulating and/or limiting a liquid flow or flow rate through the wick can therefore be left out.

The assembly is transportable as a whole due to the coupled first and second containers. A fully or partly liquid filled reservoir can lower the centre of gravity of an assembly that is provided with one or more plants and a growing medium, so that the assembly becomes more stable and the risk of it toppling and/or falling over can be reduced.

Transport is further simplified and stability is increased since the first pot is received in the second pot.

The first and second pots may be releasably coupled, e.g. for exchange of the first and/or second pot, for cleaning the reservoir etc.

In addition, the first and second pots are coupled by fitting close together upon coupling, e.g. with a tight fit, and they may be coupled by being provided with a closure, cooperating coupling means such as hooks and eyes and/or a lid, so that the pots can be coupled tightly and undesired separation from each other is at least complicated. Thus, evaporation of the liquid from the reservoir may be prevented as well.

The first pot has a substantially watertight wall, so that evaporation of the liquid from the reservoir can be reduced and so that undesired transport from the reservoir outside of the wick is prevented.

The reservoir is provided with a (re)filling aperture, which may be closable, so that the liquid level may be replenished. Closability may counter loss of liquid through evaporation.

The assembly may be arranged to give a signal to a user when the reservoir is filled over a particular level. E.g., a window may be arranged in the reservoir. Also, a float may be provided with a signalling means, e.g. a pen protruding from the filling opening on overfilling. An electric signalling system may also be provided. Further it is possible that the first pot is movably coupled with the second pot and functions as a float and starts to float in the second pot with excess filling. Another option is to provide an overflow or other filling limitation, which may coincide with a filling aperture.

In an embodiment the wick protrudes into the interior space of the first pot through an opening in a wall of the first below an upper edge, such as between 0.5 and 5 cm from it, preferably between 1 and 3 cm. Due to this the wick may be fully covered with the growing medium and thus be remain substantially invisible. Further, evaporation of the transported liquid from the wick is prevented.

A plant is cultivated in a cultivating pot. This needs holes to allow administration of water and nutrients to the plant. It is beneficial if the assembly is realised such that the first pot of the assembly is substantially of equal shape to the cultivating pot in which the plant that is to be transported and/or sold is or has been cultivated. In that case the plant can be repotted without requiring to reduce the size of the soil block or to add extra growing medium (e.g. soil). The cultivating pot can then be reused.

The first pot and the cultivating pot may for instance be made with substantially the same techniques and/or machines, e.g. via injection moulding. A mould for that may be provided with plugs or presses etc. for defining holes in the cultivation pot, and wherein for forming of the first pot the corresponding plugs, stamps, etc. are removed from the mould, so that otherwise substantially identical pots are formed.

It is possible to offer the assembly together with a cultivating pot, so that a packet is formed for cultivation and subsequent sale.

The assembly may comprise growing material and a plant, wherein the reservoir is arranged to contain sufficient liquid and possibly nutrients and/or dunging substances to let the plant survive a particular period, e.g. one, two or three weeks or a month. The period is preferably calculated to a customary period for transport from a grower to the moment of sale to a consumer.

The first pot and in particular the second pot may comprise an ornamental pot. The first and/or second pot may be formed stackable for place- and volume-efficient empty transport.

The assembly may be formed such that the outer sizes of the assembly correspond to standard sizes, e.g. for dense filling of a level of a so-called "Danish cart", which is the de facto standard transporting means for the professional plant growing industry. To that end the first and/or second pot may have a substantially rectangular upper side in cross section, possibly combined with a bottom side that is substantially rounded, e.g. elliptical in cross section.

The assembly provide herewith may be manufactured cost-efficient, in particular than the systems described hereinbefore. Further, the costs in use of the provided assembly may be reduced for transport and/or storage, in particular since attention to and/or (time for) care of the plant may be reduced and/or be required less, what may benefit the condition of the plant and/or its survival. Thus, plants may fare better in surroundings wherein time for and/or knowledge of plant care are limited for shorter or longer periods, e.g. in supermarkets, home improvement stores and/or in consumers homes. Thus, loss costs for wholesale and/or retail may be reduced and for consumers satisfaction and enjoyment may be increased and/or extended.

### BRIEF DESCRIPTION OF THE DRAWINGS

The above-described will hereafter be more explained with reference to the drawings, in which
Fig. 1 shows a first embodiment in cross section;
Fig. 2A shows a second embodiment in cross section; and
Fig. 2B is a top view of the embodiment of Fig. 2A, with the cross section plane of Fig. 2A indicated;
Figs. 2C-2D show a further embodiment in cross section and top view like Figs. 2A-2B, and Fig. 2E shows this embodiment in rear view;
Figs. 3A-3C sow another embodiment, in perspective view, top view and cross section according to line C in Fig. 3B, respectively;
Figs. 4 and 5 show arrangements of a number of assemblies according to Figs. 3A-3C; and
Figs. 6A-6C show a further embodiment of an assembly.

### DETAILED DESCRIPTION OF EMBODIMENTS

It is noted that the drawings are schematic, not necessarily to scale and that details that are not required for understanding the present invention may have been omitted. Elements that are at least substantially identical and/or that perform an at least substantially identical function are denoted by the same numeral.

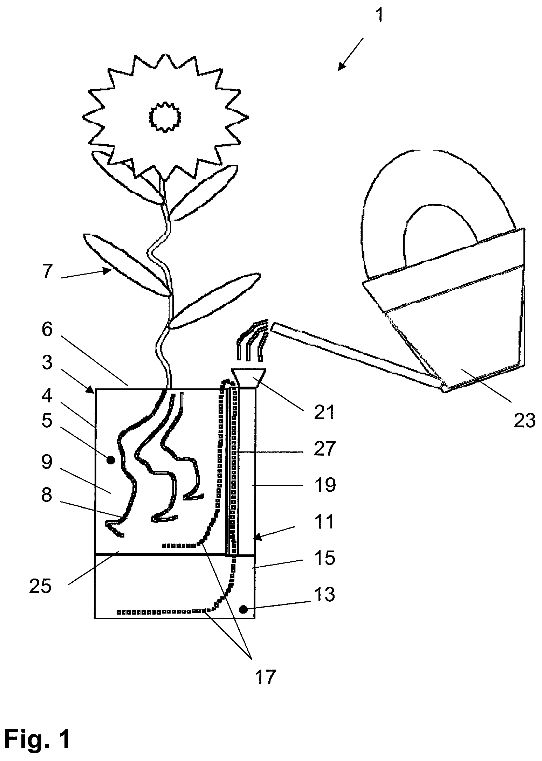

Fig. 1 shows a plant pot assembly 1, comprising a first pot 3 with a perimeter wall 4 which surrounds an interior space 5 with an upper rim 6 and in which a plant 7 with roots 8 in soil 9 is received. The assembly further comprises a second pot 11 with a wall 12 and an interior space 13 by which a liquid reservoir 15 is formed, and a wick 17.

The second pot 11 comprises a filling tube 19 which extends along the first pot 3 and which is provided with closable opening 21, so that the reservoir 15 may be filled, e.g. with the aid of a watering can 23. A filling opening 21 for the reservoir 15 that is positioned at or near an upper rim of the first pot 3 facilitates filling the reservoir 15. It also stresses filling the reservoir instead of watering (the soil of) the first pot 3, which reduces chances of improper use of the assembly and drowning of the plant.

Since the plant 7 is in an enclosed pot, watering the plant should be done only via the reservoir, since the risk of drowning the plant becomes large otherwise.

The first pot 3 and the second pot 11 are fixedly coupled together. The reservoir 15 is situated below the first pot 3 and is separated from it by means of a liquid tight, in particular water tight, bottom 25 of the first pot 3. The liquid level 15 is thus arranged to maintain the liquid level of the liquid received therein substantially below the bottom 25 of the first pot 3.

The wick 17 protrudes into the liquid reservoir 15 and extends from there outside (the perimeter wall 4 around) the interior space 5 of the first pot 3 but protrudes along and over the upper edge 6 into the interior space 5. The wick 17 further extends through at least a portion of the growing medium 9.

In this embodiment the wick 17 extends through a specially provided channel 27 between the first pot 3 and (the filling tube 19 of) the second pot 11.

The filling tube 19 extends aside the interior space 5 of the first pot 3. Due to this, water pressure might occur on the wick 17 which might cause a surplus of liquid in the soil 9 through siphoning of the wick 17. To prevent excess wetting, the filling tube 19 may be formed such that the interior volume of the filling tube 19 is negligible with respect to the rest of the volume of the first pot 3. Further, a closing lid and/or signalling may be provided which assists preventing filling of the reservoir 15 with a liquid level above the bottom of the first pot 3. A small volume of the filing tube 19 further provides a safety against overfilling the assembly since, during filling, the tube may give "clucking"-sounds, the tone of which being related to the level of the liquid level in the tube.

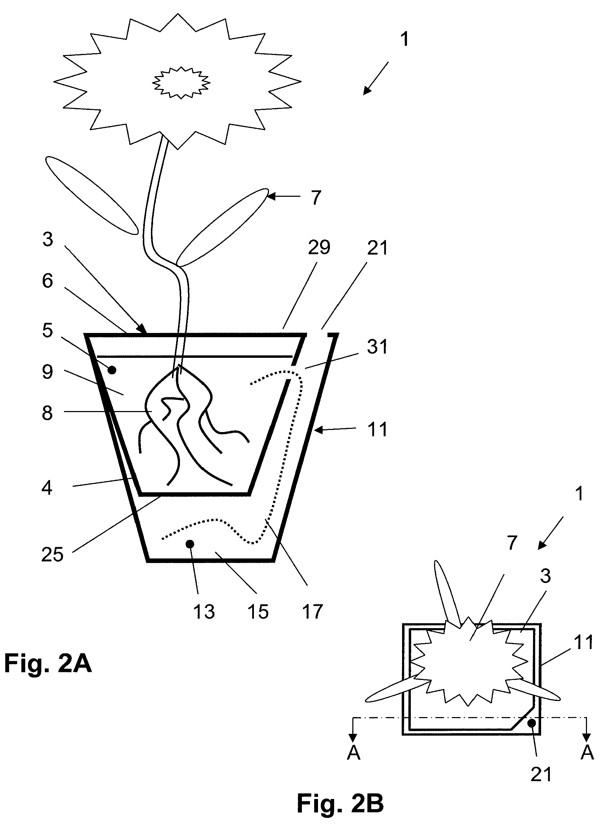

Fig. 2A and 2B show another embodiment, wherein the first pot 3 is substantially fully received in the second pot 11, so that the upper edge 6 of the first pot is substantially flush with the upper edge 29 of the second pot 11. This provides a pleasant appearance. The reservoir 15 is formed, in this embodiment, between the bottoms and walls of the first and second pots 3, 11. Here, the wick 17 extends between the pots 3, 11 and protrudes into the interior space 5 of the first pot 3 through an opening 31 in the side wall 4 of the first pot 3. The opening 31 is invisibly covered by the growing medium 9. The portion of the wick 17 that protrudes into the first pot 3 is relatively short and extends only in an upper portion of the first pot 3, wherein the wick 17 remains substantially above the roots 8 of the plant 7.

The reservoir 15 may be filled through filling opening 21, with provides direct access to the interior space 13 of the second pot 11. Here, the opening 21 is defined by the cooperating shapes of the first and second pots 3, 11, wherein here the first pot has a bevelled edge of an otherwise rectangular shape in top view, see Fig. 2B, but other shapes, like a spout or a funnel and the like are also possible. A benefit of the shape of Fig. 2B is that a close filling of a surface is facilitated. Further, the shape of the first pot comparable to that of a cultivating pot.

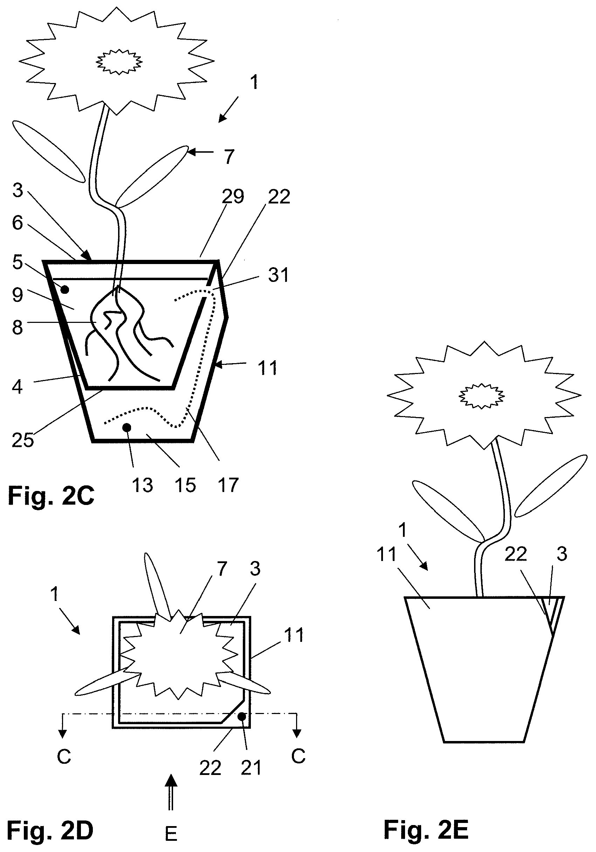

Figs. 2C-2E show a variant of the embodiment of Figs. 2A-2B in cross section (Fig. 2C), top view (Fig. 2D) and rear view (Fig. 2E), respectively, wherein the filling opening 21 is enlarged and (rim 22 of the filling opening 21) is lowered by, relative to the embodiment of Figs. 2A-2B, removing a corner of the second pot 11. The position of the bottom of (the rim 22 of) the filling opening 21 is preferably chosen to limit a maximum filling level in the reservoir at a level below the wick opening 31. However, the level is preferably chosen such that the risk for spilling water from the reservoir during filling and in particular during transport in filled state is small.

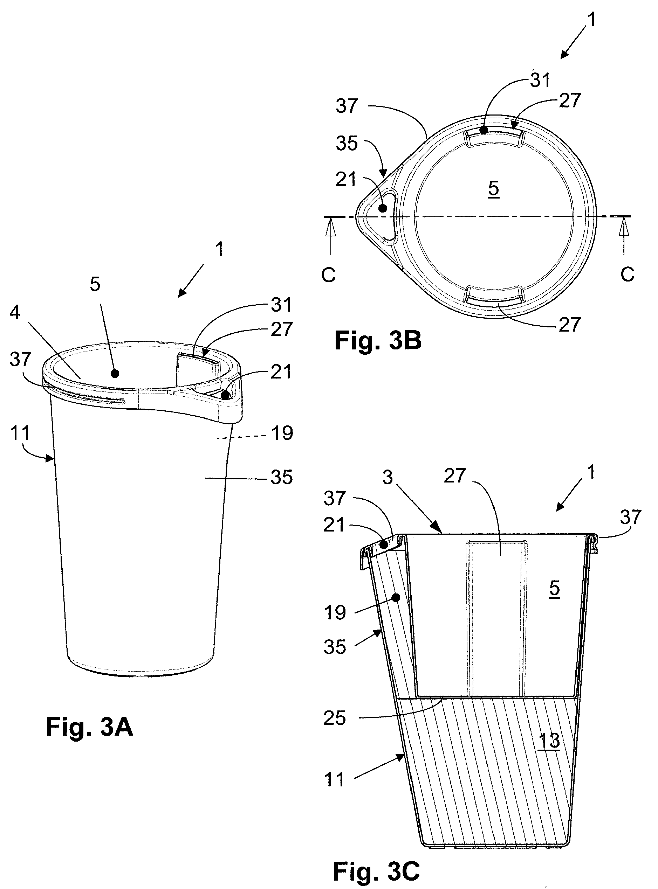

Figs. 3A-3C show a further embodiment of an assembly 1. The first pot 3 is substantially round in top view. The second pot 11 is also substantially round, but is provided with a funnel 35 which forms a filling channel 19 with a filling opening 21 at the upper side of the assembly 1. The assembly 1 provides two channels 27 with openings 31 to the interior of the first pot 3 for a wick (not shown). A plurality of wick facilitates increased and/or symmetric humidification of the soil. The side walls of the first and second pots lie close each other to reduce the volume between the side walls as much as possible. The first pot 3 has an upper rim 37 which grips around the upper rim of the second pot 11, here with an inwardly dented lip around a thickened portion of the upper rim, so that a fixed coupling, here a snap coupling, is formed which prevents sudden loosening and such that a simply transportable unit is formed. The upper rim 37 of the first pot 3 grips around the entire upper rim of the second pot 11 so that a unit is formed which increases hygiene and has a pleasing appearance. An opening in the upper rim 37 of the first pot 3 defines the filling opening 21.

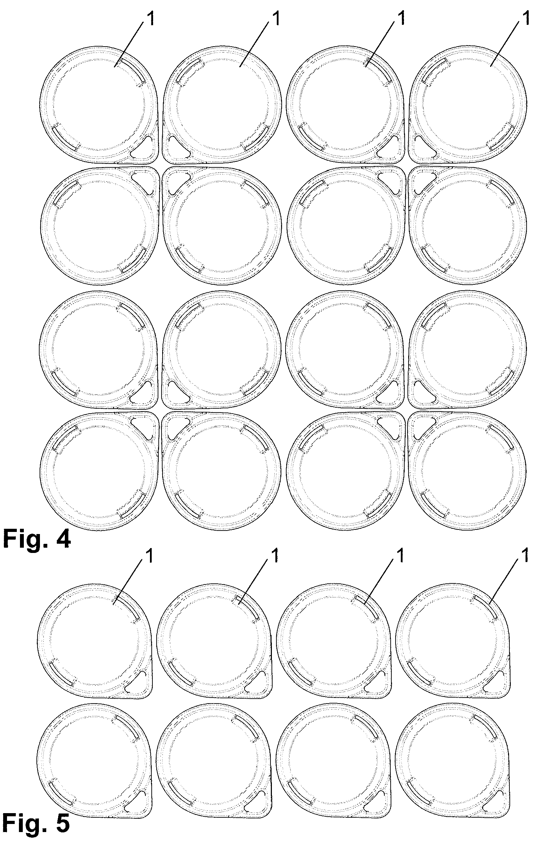

Best visible in Fig. 4 is that the assembly 1 is substantially round in top view with a funnel 35, such that a drop-shape in top view is provided, with a relatively sharp side formed by the funnel 35 and a relatively blunt side by the round basic shape. The funnel 35 of the assembly fits, at the relatively sharp side, within a circumscribed rectangle, here a circumscribed square, around the blunt side. Thus, the assembly is formed such that a regular close arrangement of a number of assemblies 1 is possible, here in a square arrangement, see Fig. 4. A triangular or hexagonal basic shape is also possible and suitable. In another arrangement (Fig. 5) the assemblies can be arranged substantially identically, which provides an attractive uniform appearance.

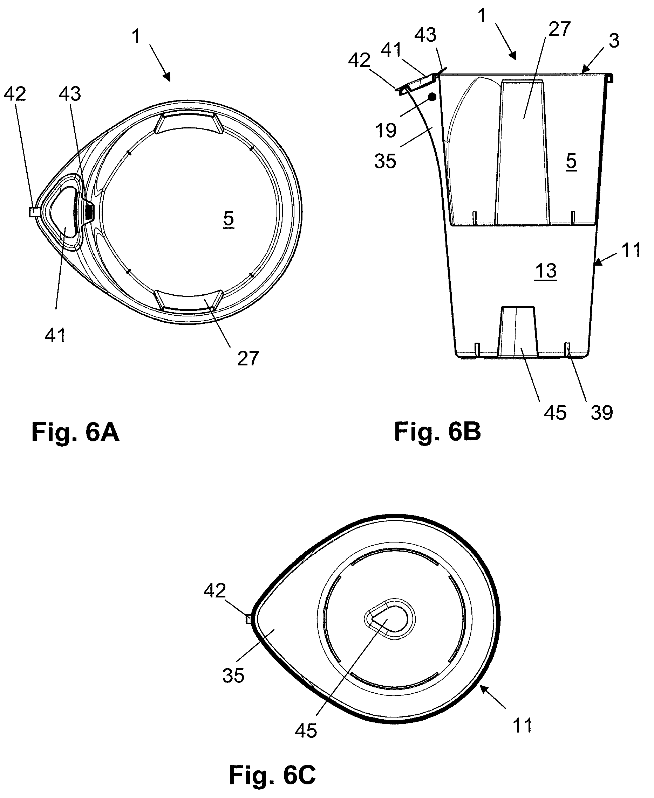

Figs. 6A-6C show a further improved variant of an assembly 1, in top view (Fig. 6A), cross section (Fig. 6B) and bottom view (Fig. 6C). Here, the wall of the funnel 35 between the filling opening 21 and the bottom of the inner pot 3 is bent inward with respect to the embodiment of Figs. 3A-3C, towards the inner pot 3 (best visible in Fig. 6B), so that the volume of the filling channel 19 and therefore the intermediate volume in between the side walls of the inner pot 3 and the outer pot 11 is reduced further and the reservoir is arranged substantially entirely below the bottom of the inner pot 3. Further, the side walls of the first and second pots 3, 11 closely fit to each other whereby they touch each other over the major part of their surfaces, preferably substantially over their entire surface except for the portions of the filling channel 19 and the wick channels 27, to minimise the volume between the side walls of the pots 3, 11.

The opening 21 of the funnel 35 is closed in this embodiment against leaking and evaporation with a lid 41, which may be attached to the first or second pot 3, 11 against loss, e.g. by means of a film hinge 42 such as here. In the shown embodiment the lid 41 is provided with pulling lip 43 for simple opening, wherein here, the pulling lip 43 is oriented towards the middle of the assembly and thus stays within the perimeter of the second pot 11. In the embodiment of Figs. 6A-6C the outer pot 11 is provided with a number of optional cams 39 that facilitate a stable stacking of a number of pots 11. In the inner pot 3 the channels 27 for the wicks extend somewhat tapered upward to facilitate fabrication and a stable stacking.

To facilitate obtaining a suitable arrangement, e.g. for a display according to Fig. 4 and/or 5, the bottom side of the second pot is provided with one or more optional positioning structures for cooperation with (structures of) a suitable carrier (not shown). Here, a shape lock 45 is provided that breaks rotational symmetry of the pot 11 and in this embodiment comprises a recess in the bottom or the pot 11 with an noncircular shape, that can cooperate with one or more suitably formed protrusions of a carrier to define a particular relative position and/or orientation. Here, the shape lock 45 is provided conically such that a self-seeking effect to the desired position may be achieved, and which facilitates manufacturing and/or stacking of a number of pots 11.

Due to a slender shape of the assembly, the connection between the first and second pots and/or at least substantially fully accommodating the first pot in the second pot, an attractive assembly may be provided. In embodiments with a relatively high outer wall of the second pot relative to the bottom of the first pot and the upper side of the reservoir, e.g. wherein the first pot is received substantially fully in the second pot and the upper rims of the first and second pots are arranged at similar levels, spilling of water during transport may be prevented. Due to a substantially straight or conical shape of the first and second pots 3, 11 which flares toward the upper side the pots 3, 11 can easily be placed in each other with a close fit, so that a reservoir volume between both pots and above the bottom of the first pot 3 is reduced or even prevented as much as possible, which otherwise could lead to excessive water supply to the plants.

In embodiments wherein the first pot is received substantially or entirely in the second pot, the wall of the second pot 11 forms a protection for and reinforcement of (the wall of) the first pot 3 so that further a robust assembly may be provided with a relatively thin wall of the first pot 3, which saves material. In particular in an assembly 1 wherein the first pot 3 is coupled with the second pot 11 by a tight fit and the walls of the pots 3, 11 touch each other at least partly and support each other, e.g. to couple the first and second pots and/or to minimise the reservoir volume above the bottom of the first pot, a portion of the second pot 11 can also be provided relatively thin.

Exemplary values for suitably dimensions of the model shown in Figs. 6A-6C are: volume first pot, ca. 1 litre (e.g. ca. 11 cm diameter x 10 cm height); volume reservoir in the second pot below the bottom of the first pot ca. 0.75 litre, wick channels ca. 3 x 0.3 cm for wicks of ca. 2.5-3 x 0.2 cm; residual volume between first and second pots (filling tube, wick channels, other intermediate spaces) ca. 50 ml or less, e.g. in a preferred embodiment less than ca. 35 ml. This residual volume is, in use, reduced by the volume taken up by the wick(s), typically about 5-10 ml. The residual volume, which thus is less than about 3% of the volume of the first pot, is, in use, not fully filled with liquid (water) to prevent overflowing and/or spilling, and to provide at most a negligible amount of water in the residual volume between the side walls of the pots relative to the volume of the first pot, which can be used in a short time span by the plant so that the fluid level in the reservoir is located further below the bottom of the first pot. An assembly with such dimensions proves to keep a water-loving plant like a hortensia in good condition without requiring further care. A relatively drought-loving plant such as a cactus stays in good condition much longer.

The invention is not restricted to the above described embodiments which can be varied in a number of ways within the scope of the claims.

For instance, the first and second pots may be larger, smaller and/or formed different, e.g. higher or lower. They may be earthenware, glass, plastic or another material.

The assembly may comprise more than one wick. A wick may be surrounded by a sleeve. The wick material may comprise glass fibre and/or cotton fibre or another material, and it can have a sponge-like character. It has appeared that spongiform and/or wicks woven straight with respect to their length direction generally perform poorly due to either a too high or a too low capillary power, which leads to drowning or rather drying of the plant. A wick of braided or diagonally woven material, with threads or bundles of filaments at a diagonal angle with the length direction of the wick, e.g. an angle between about 30 and 60 degrees with the length direction of the wick, proved particularly suitable. It is suspected that due to the diagonal direction of the wick threads an evenly distributed capillary action with always a direction component in the direction of elongation of the wick and the transport direction for the liquid is provided, which is not interrupted by a structure perpendicular to the wick, such as perpendicular weft threads and/or a rim of the first pot.

The assembly may be provided with a sleeve to provide it with an attractive appearance, and/or be provided with one or more supports for flowers or plants, e.g. climbing plants.

The assembly may be arranged for and/or provided with more than one plant. The plant may be a chamber plant or an outside plant and need not be a flowering plant.

Options and aspects of different embodiments may be exchanged and combined, unless stated otherwise.

## Claims

1. A plant pot assembly (1) comprising a first pot (3) with an interior space (5) for receiving therein a plant (7) in soil (9) or in another growing medium,
a second pot (11) coupled to the first pot (3) with an interior space (13) for forming a liquid reservoir (15), and
a wick (17) which extends from the liquid reservoir to within the interior space of the first pot for transporting liquid from the liquid reservoir into the interior space of the first pot,
wherein the liquid reservoir has a filling opening (21) at or near an upper side of the assembly,
wherein the wick extends between the first and second pots and protrudes along or near an upper edge of the first pot into the interior space of the first pot, e.g. through an opening (31) in a wall (4) of the first pot, and
wherein the first pot is substantially watertight and the assembly is arranged to prevent liquid transport between the reservoir and the growing medium via another route than the wick,
**characterised in that** the first pot is received in the second pot with a close fit so that the liquid reservoir is situated substantially below the first pot, at least substantially below the interior space thereof.

2. The assembly (1) of claim 1, wherein the wick (17) is arranged in the interior space (5) of the first pot (3) in an upper portion of it.

3. The assembly (1) of any preceding claim, wherein the first pot (3) is substantially fully received in the second pot (11).

4. The assembly (1) of any preceding claim, wherein the first pot (3) and the second pot (11) are releasably coupled.

5. The assembly (1) of any preceding claim, wherein the first and second pots (3, 11) are coupled by an at least partly tight fit of the pots, and/or the first and second pots are provided with a closure and/or lid.

6. The assembly (1) of any preceding claim, wherein the side walls (4, 12) of the first and second pots (3, 11) touch each other at least partly and support each other, wherein preferably the side walls touch each other over the major part, such as e.g. 75% or more of the surface of the side walls of the first pot.

7. The assembly (1) of any preceding claim, wherein the assembly is arranged to give a signal to a user when the reservoir (15) is filled over a particular level.

8. The assembly (1) of any preceding claim, wherein at least the first pot (3) or the second pot (11) comprises an ornamental pot.

9. The assembly (1) of any preceding claim, further comprising growing material (9) and a plant (7).

10. The assembly of claim 9, wherein the reservoir (15) is arranged to contain sufficient liquid and possibly nutrients and/or dunging substances to let the plant survive a particular period.

11. The assembly (1) of any preceding claim, wherein the wick (17) comprises a braided or diagonally woven material with respect to the length direction of the wick.

12. The assembly (1) of claim 11, wherein the wick (17) is constructed from threads and/or filaments that run at an angle between ca 30 and 60 degrees with the direction of elongation of the wick.

13. The assembly (1) of any preceding claim, wherein at least the second pot (11) is substantially round or drop-shaped in top view with a relative sharp side and a relatively blunt side, wherein the relatively sharp side comprises a funnel (35) that is arranged within a circumscribed rectangle, preferably a circumscribed square, about the round or blunt side.

14. The assembly (1) of any preceding claim, provided with a carrier for one or more assemblies, wherein the assembly and the carrier are provided with cooperating positioning structures for defining a mutual relative position.

## Patentansprüche

1. Pflanzentopf-Vorrichtung (1) mit einem ersten Topf (3) mit einem inneren Raum (5) zum darin Aufnehmen einer Pflanze (7) in Erde (9) oder in einem anderen Wachstumsmedium,
einem zweiten Topf (11), der mit dem ersten Topf (3) verbunden ist und der einen inneren Raum (13) zum Ausbilden eines Flüssigkeitsreservoirs (15) hat, und
einem Docht (18), welcher sich von dem Flüssigkeitsreservoir aus in den inneren Raum des ersten Topfs hinein erstreckt zum Transportieren von Flüssigkeit von dem Flüssigkeitsreservoir in den inneren Raum des ersten Topfs,
wobei das Flüssigkeitsreservoir eine Einfüllöffnung (21) an oder nahe einer oberen Seite der Vorrichtung hat,
wobei der Docht sich zwischen dem ersten und dem zweiten Topf erstreckt und entlang oder nahe einem oberen Rand des ersten Topfs in den inneren Raum des Topfs hinein vorsteht, z.B. durch eine Öffnung (31) in einer Wand (4) des ersten Topfs hindurch, und
wobei der erste Topf im Wesentlichen wasserdicht ist und die Vorrichtung eingerichtet ist, um einen Flüssigkeitstransport zwischen dem Reservoir und dem Wachstumsmedium über einen anderen Pfad als den Docht zu verhindern,
**dadurch gekennzeichnet, dass** der erste Topf im zweiten Topf in einem engen Sitz aufgenommen ist, derart dass das Flüssigkeitsreservoir im Wesentlichen unter dem ersten Topf, zumindest im Wesentlichen unter dem inneren Raum davon, angeordnet ist.

2. Vorrichtung (1) gemäß Anspruch 1, wobei der Docht (17) in dem inneren Raum (5) des ersten Topfs (3) in einem oberen Abschnitt davon angeordnet ist.

3. Vorrichtung (1) gemäß irgendeinem vorhergehenden Anspruch, wobei der erste Topf (3) im Wesentlichen vollständig in dem zweiten Topf (11) aufgenommen ist.

4. Vorrichtung (1) gemäß irgendeinem vorhergehenden Anspruch, wobei der erste Topf (3) und der zweite Topf (11) lösbar gekuppelt sind.

5. Vorrichtung (1) gemäß irgendeinem vorhergehenden Anspruch, wobei der erste und der zweite Topf (3, 11) durch einen zumindest teilweise festen Sitz der Töpfe gekuppelt sind, und/oder der erste und der zweite Topf mit einem Verschluss und/oder einem Deckel ausgestattet sind.

6. Vorrichtung (1) gemäß irgendeinem vorhergehenden Anspruch, wobei Seitenwände (4, 12) des ersten und des zweiten Topfs (3, 11) einander zumindest teilweise berühren und einander stützen, wobei die Seitenwände bevorzugt einander über den Großteil, wie z.B. 75% oder mehr, der Fläche der Seitenwände des ersten Topfs berühren.

7. Vorrichtung (1) gemäß irgendeinem vorhergehenden Anspruch, wobei die Vorrichtung eingerichtet ist, um ein Signal an den Verwender zu geben, wenn das Reservoir (15) über ein vorbestimmtes Niveau befüllt ist.

8. Vorrichtung (1) gemäß irgendeinem vorhergehenden Anspruch, wobei wenigstens der erste Topf (3) oder der zweite Topf (11) einen Verzierungstopf aufweist.

9. Vorrichtung (1) gemäß irgendeinem vorhergehenden Anspruch, ferner aufweisend Wachstumsmaterial (9) und eine Pflanze (7).

10. Vorrichtung gemäß Anspruch 9, wobei das Reservoir (15) eingerichtet ist, um ausreichend Flüssigkeit und möglicherweise Nährstoffe und/oder Düngersubstanzen zu enthalten, um die Pflanze eine bestimmte Zeitspanne überleben zu lassen.

11. Vorrichtung (1) gemäß irgendeinem vorhergehenden Anspruch, wobei der Docht (17) ein geflochtenes oder diagonal gewebtes Material bezüglich der Längsrichtung des Dochts aufweist.

12. Vorrichtung (1) gemäß Anspruch 11, wobei der Docht (11) gebildet ist von Fäden und/oder Fasern, welche in einem Winkel zwischen ca. 30 und 60 Grad zur Längsrichtung des Dochts verlaufen.

13. Vorrichtung (1) gemäß irgendeinem vorhergehenden Anspruch, wobei wenigstens der zweite Topf (11) in der Draufsicht im Wesentlichen rund oder tropfenförmig ist mit einer relativ spitzen Seite und einer relativ stumpfen Seite, wobei die relativ spitze Seite einen Trichter (35) aufweist, der in einem umschriebenen Rechteck, bevorzugt einem umschriebenen Quadrat, um die runde oder stumpfe Seite angeordnet ist.

14. Vorrichtung (1) gemäß irgendeinem vorhergehenden Anspruch, ausgestattet mit einem Träger für eine oder mehrere Vorrichtungen, wobei die Vorrichtung und der Träger mit korrespondierenden Positionierstrukturen zum Definieren einer gegenseitigen Relativposition versehen sind.

## Revendications

1. Ensemble de pot pour plante (1) comprenant un premier pot (3) avec un espace intérieur (5) pour y recevoir une plante (7) dans la terre (9) ou dans un autre milieu de culture,
un second pot (11) couplé au premier pot (3) avec un espace intérieur (13) pour former un réservoir de liquide (15), et
une mèche (17) qui s'étend à partir du réservoir de liquide jusqu'à l'intérieur de l'espace intérieur du premier pot pour transporter le liquide du réservoir de liquide dans l'espace intérieur du premier pot,
dans lequel le réservoir de liquide a une ouverture de remplissage (21) au niveau de ou à proximité d'un côté supérieur de l'ensemble,
dans lequel la mèche s'étend entre les premier et second pots et fait saillie le long de ou à proximité d'un bord supérieur du premier pot dans l'espace intérieur du premier pot, par exemple, à travers une ouverture (31) dans une paroi (4) du premier pot, et
dans lequel le premier pot est sensiblement imperméable à l'eau et l'ensemble est agencé pour empêcher le transport de liquide entre le réservoir et le milieu de culture via un autre acheminement que la mèche,
**caractérisé en ce que** le premier pot est reçu dans le second pot avec un ajustement étroit de sorte que le réservoir de liquide est situé sensiblement au-dessous du premier pot, au moins sensiblement au-dessous de son espace intérieur.

2. Ensemble (1) selon la revendication 1, dans lequel la mèche (17) est agencée dans l'espace intérieur (5) du premier pot (3) dans une partie supérieure de ce dernier.

3. Ensemble (1) selon l'une quelconque des revendications précédentes, dans lequel le premier pot (3) est sensiblement complètement reçu dans le second pot (11).

4. Ensemble (1) selon l'une quelconque des revendications précédentes, dans lequel le premier pot (3) et le second pot (11) sont couplés de manière amovible.

5. Ensemble (1) selon l'une quelconque des revendications précédentes, dans lequel les premier et second pots (3, 11) sont couplés par un ajustement au moins partiellement serré des pots, et/ou les premier et second pots sont prévus avec une fermeture et/ou couvercle.

6. Ensemble (1) selon l'une quelconque des revendications précédentes, dans lequel les parois latérales (4, 12) des premier et second pots (3, 11) se touchent au moins partiellement et se supportent entre elles, dans lequel de préférence les parois latérales se touchent sur la majeure partie, telle que par exemple 75 % ou plus de la surface des parois latérales du premier pot.

7. Ensemble (1) selon l'une quelconque des revendications précédentes, dans lequel l'ensemble est prévu pour donner un signal à un utilisateur, lorsque le réservoir (15) est rempli au-delà d'un niveau particulier.

8. Ensemble (1) selon l'une quelconque des revendications précédentes, dans lequel au moins le premier pot (3) ou le second pot (11) comprend un pot ornemental.

9. Ensemble (1) selon l'une quelconque des revendications précédentes, comprenant en outre un matériau de culture (9) et une plante (7).

10. Ensemble selon la revendication 9, dans lequel le réservoir (15) est agencé pour contenir suffisamment de liquide et éventuellement des nutriments et/ou des substances de fumier pour laisser la plante résister à une période particulière.

11. Ensemble (1) selon l'une quelconque des revendications précédentes, dans lequel la mèche (17) comprend un matériau tressé ou tissé en diagonale par rapport au sens de la longueur de la mèche.

12. Ensemble (1) selon la revendication 11, dans lequel la mèche (17) est construite à partir de fils et/ou de filaments qui s'étendent à un angle compris entre environ 30 et 60 degrés par rapport à la direction d'allongement de la mèche.

13. Ensemble (1) selon l'une quelconque des revendications précédentes, dans lequel au moins le second pot (11) est sensiblement rond ou en forme de goutte sur une vue de dessus avec un côté tranchant relatif et un côté relativement peu tranchant, dans lequel le côté relativement tranchant comprend un entonnoir (35) qui est agencé à l'intérieur d'un rectangle circonscrit, de préférence un carré circonscrit, autour du côté rond ou peu tranchant.

14. Ensemble (1) selon l'une quelconque des revendications précédentes, prévu avec un support pour un ou plusieurs ensembles, dans lequel l'ensemble et le support sont prévus avec des structures de positionnement coopératives pour définir une position mutuelle relative.
